# EUROPEAN PATENT APPLICATION

(11) **EP 4 697 298 A1**
(43) Date of publication of application: **18.02.2026**
(21) Application number: 24194362.0
(22) Date of filing: 13.08.2024
(51) Int. Cl.: G08B 25/10, H04W 76/50, H04W 84/18

(54) **COMMUNICATION HANDLING**

(71) Applicant: Dräger Safety AG & Co. KGaA, 23560 Lübeck (DE)
(72) Inventor: VARDY, Thomas Eric, Howden, NE28 0QB (GB)
(74) Representative: Haseltine Lake Kempner LLP

(57) **Abstract**

There is provided a system for handling communications in a network. The system comprises a plurality of network nodes (202, 204, 206), and a plurality of breathing apparatus (208, 210, 212) of the network. Each network node of the plurality of network nodes (202, 204, 206) is configured as an access point for the network. Each breathing apparatus of the plurality of breathing apparatus (208, 210, 212) is configured to establish a connection to a single corresponding network node of the plurality of network nodes (202, 204, 206). The plurality of network nodes (202, 204, 206) comprises a master node (202) and one or more support nodes (204, 206). The master node (202) is configured to establish a connection to each support node of the one or more support nodes (204, 206). Each support node of the one or more support nodes (204, 206) is configured to initiate transmission of first information indicative of one or more corresponding breathing apparatus towards the master node (202). The system is configured to, if a first master node enters an inactive state, select, based on second information indicative of the one or more support nodes (204, 206), a first support node to be configured as a second master node.

## Description

### Technical Field

The present disclosure relates to a system for handling communications in a network.

### Background

Emergency services (e.g. fire services) are organisations that ensure public safety, security, and health by addressing and resolving different emergencies. As such, emergency services require every advantage possible when dealing with emergency response incidents. This is especially true as emergency services are required to respond to increasingly more complex incidents. Indeed, an emergency response incident can involve many individuals, including both responders and members of the public, and responders are commonly equipped with specialised equipment which must be carefully monitored and maintained in order to provide safety for the responders. For example, fire services regularly deal with toxic environments created by combustible materials, resulting in smoke, oxygen deficiency, elevated temperatures, poisonous atmospheres, and violent air flows. To combat some of these risks, firefighters carry breathing apparatus (BA). The proper management of such specialised equipment can mean the difference between a successful incident outcome and disaster.

Moreover, emergency services must be ready to adapt to an array of different environments (e.g. both natural and man-made), which cause further challenges with organising and effectively dealing with an incident. As such, ineffective management of such incidents can cause serious harm to the public and result in irreparable damage to infrastructure.

In the past, emergency services (e.g. fire services) have relied on analogue tools to monitor and control the handling of emergency response incidents. For example, an entry control operative (ECO) will commonly use a physical board (e.g. an entry control board (ECB)) for keeping track of fire fighters deployed at an incident (e.g. a building fire). In such a scenario, the ECO monitors the incident by physically organising the board with the help of "tallies", which visibly show the name of the fire fighter being deployed at the incident and the time at which said fire fighter entered the incident. Thus, the tallies can be physical elements which are added and removed from the board to allow the ECO to keep track of the personnel deployed at an incident. The addition of a physical tally to the board can act as an incident registration for the corresponding firefighter. In addition to the physical board, the ECO commonly utilises walkie-talkies to manually control the incident and receive updates on the condition of personnel.

In recent years, some emergency services have adopted telemetry techniques which provide for enhanced communication between the personnel deployed at an incident. Specifically, emergency services personnel can be provided with equipment which enables (e.g. wireless) communication with other personnel and provides for the sharing of information describing the status of a wearer of said equipment, and of the equipment itself. As such, emergency services personnel can be provided with equipment that enables the transmission of vital information in real time to an ECO, which gives the ECO more time to make tactical, and potentially lifesaving decisions. Therefore, techniques utilising enhanced communication provide a significant advantage for the overall safety of individuals involved in the incident and provides greater reassurance for responders during a deployment.

However, there exist challenges associated with current techniques for handling communications in certain scenarios such as emergency response incidents. For example, emergency response incidents (e.g. forest fires and large building fires) can involve deploying and organising multiple personnel and pieces of equipment over a large area and/or volume of space. In a specific example, a large building fire can involve multiple entry points for responding firefighters. As such, it can be challenging to maintain communication with all personnel and/or equipment, especially when said personnel and/or equipment are spread over large areas, or when communication pathways are blocked by obstacles and/or interference. Moreover, increased use of equipment can lead to an increased likelihood of equipment failure and/or error, which is detrimental to the handling of an incident.

### Summary

As mentioned above, there are certain challenges associated with existing techniques for handling communications in a network. In particular, when handling incident communications, the presence of multiple pieces of equipment can cause issues with communication range and increase the complexity of the operation. It is thus valuable to provide an improved technique in which communication between equipment is made more adaptable and robust.

Therefore, according to a first aspect of the disclosure, there is provided a system for handling communications in a network. The system comprises a plurality of network nodes, and a plurality of breathing apparatus of the network. Each network node of the plurality of network nodes is configured as an access point for the network. Each breathing apparatus of the plurality of breathing apparatus is configured to establish a connection to a single corresponding network node of the plurality of network nodes. The plurality of network nodes comprises a master node and one or more support nodes. The master node is configured to establish a connection to each support node of the one or more support nodes. Each support node of the one or more support nodes is configured to initiate transmission of first information indicative of one or more corresponding breathing apparatus towards the master node. The system is configured to, if a first master node enters an inactive state, select, based on second information indicative of the one or more support nodes, a first support node to be configured as a second master node.

Thus, in the manner described above, improved techniques for handling communications in a network are provided. Advantageously, the system provides for a distributed network that allows for information (e.g. telemetry messages) to be passed between network nodes of a plurality of network nodes. As such, any breathing apparatus of a plurality of breathing apparatus need only be in range of a single network node of the system to be able to communicate with any other entity (e.g. network node and/or BA) of the system. Therefore, the system provides a larger effective range for BA and, consequently, the wearers of the BA. Moreover, the techniques provide for automatic (re)selection of a new master node if a current master node enters an inactive state in the network. As such, the system ensures that the system is always provided with a master node, ensuring a maintained connection between the plurality of network nodes in the system.

### Brief description of the drawings

For a better understanding of the techniques, and to show how they may be put into effect, reference will now be made, by way of example, to the accompanying drawings, in which:
Figure 1 is a block diagram illustrating an entity according to an embodiment; and
Figures 2 and 3 are block diagrams illustrating a system according to some embodiments.

### Detailed Description

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject-matter disclosed herein, the disclosed subject-matter should not be construed as limited to only the embodiments set forth herein; rather, these embodiments are provided by way of example to convey the scope of the subject-matter to those skilled in the art.

As mentioned above, there is provided herein a system for handling communications in a network. The techniques described herein can be used in respect of any network, such as any communications or telecommunications network, e.g. cellular network. The network referred to herein may be a radio network. For example, the network referred to herein may be a 2.4GHz radio network. In some examples, the network may comprise a Wi-Fi network (e.g. based on the Institute of Electrical and Electronics Engineers (IEEE) 802.11 family of standards). Alternatively, or in addition, the network may comprise a Bluetooth network (e.g. based on the IEEE 802.15.1 family of standards). The network referred to herein may be a telemetry network.

The system and techniques described herein involve a plurality of network nodes. As mentioned herein, each network node of the plurality of network nodes is configured as an access point (AP) for the network. As such, each network node can be configured to provide network access to other entities (e.g. the plurality of beathing apparatus (BA) referred to herein). In some examples, a network node may be referred to herein as an entry point. In some examples, the plurality of network nodes can be configured to provide (e.g. support) at least part of the network referred to herein. For example, the plurality of network nodes referred to herein may form a decentralised and/or distributed network. As such, the plurality of network nodes can be configured to permit (e.g. telemetry) information to be communicated (e.g. passed) between the network nodes within the network. In some examples, the plurality of network nodes can be configured to allow any (e.g. telemetry) device in range of a (e.g. single) network node of the plurality of network nodes to be able to communicate with any other entity of the network. Providing a plurality of network nodes in the system, as defined herein, greatly increases the range and reliability of the network. This is useful when applied to an emergency response incident context as it allows, for example, emergency responders carrying breathing apparatus (BA) a much larger effective range of connectivity to the network. As such, the system described herein reduces the likelihood that a BA will be out of range of the network, and thus unable to be monitored and controlled remotely.

A network node of the plurality of network nodes can be configured to route communications between the network nodes and/or the plurality of BA referred to herein. Herein, a network node can be an entity that is configurable to act as a transceiver. Each network node of the plurality of network nodes referred to herein can be configured to receive information (e.g. data) from a BA. Each network node can be configured to initiate transmission of the received information towards another network node. Herein, the term "initiate" can mean, for example, cause or establish. Thus, any reference to an entity "initiating transmission" will be understood to mean that the entity (e.g. the processing circuitry of the entity) can be configured to itself transmit (e.g. via a communications interface of the entity) or can be configured to cause another entity to transmit. Each network node of the plurality of network nodes can comprise at least one (e.g. rechargeable) battery. As such, in these examples, each network node can be deployed as a wireless unit, without the need to connect the network node to an external power source. Each network node of the plurality of network nodes may be portable. In some examples, each network node may comprise at least one antenna. For example, each network node of the plurality of network nodes may comprise at least two antennas (e.g. for communicating in the network). The plurality of network nodes can be referred to herein as a plurality of "hubs", "routers", and/or "base stations (BSs)" (e.g. of the network).

The techniques described herein involve a plurality of breathing apparatus (BA). A breathing apparatus as referred to herein can be configured to initiate transmission of information (e.g. signals) and/or receive information. For example, the plurality of BA referred to herein can be configured to initiate transmission of information towards a network node as referred to herein. The plurality of BA referred to herein may comprise any type of BA. More specifically, the plurality of BA referred to herein may comprise any type of apparatus (e.g. device) which is worn by a wearer of the BA in order to provide a supply of breathable gas (e.g. air) to the wearer. As such, a BA can be advantageously utilised in an atmosphere that is immediately dangerous to life or health. In an example, the plurality of BA referred to herein may comprise a self-contained breathing apparatus (SCBA), and/or a compressed air breathing apparatus (CABA). The plurality of BA referred to herein may comprise a closed-circuit BA. Alternatively, the plurality of BA referred to herein may comprise an open-circuit BA. The BA referred to herein may comprise a lung demand regulator, a face mask, a compressed breathing gas tank, and/or a support frame.

In some examples, the plurality of network nodes referred to herein, and/or the plurality of BA referred to herein can be deployed at an emergency response incident. Herein an emergency response incident may be any type of emergency response incident. More specifically, an emergency response incident may be any incident which involves the addressing and/or resolving of an emergency. An emergency, as referred to herein, can be an urgent, unexpected and/or dangerous situation that poses an immediate risk to health, life, property and/or environment. An emergency may require urgent intervention to prevent a worsening of the situation. Examples of the emergency response incident referred to herein include, but are not limited to, incidents which pose a danger to life, a danger to health, and/or a danger to the environment. For example, the emergency response incident referred to herein may include a fire related incident (e.g. a building fire, a forest fire, a car fire, etc.). Alternatively, or in addition, the emergency response incident referred to herein may involve hazardous material operations (e.g. dealing with substances which are a risk to health, safety, property, and/or the environment).

Some of the techniques described herein involve a wireless device. A wireless device, as described herein, may be any type of wireless device. More specifically, a wireless device as referred to herein may be any device configured to communicate wirelessly with one or more other entities (e.g. of the network referred to herein). For example, the wireless device may be a user equipment (UE). The wireless device referred to herein can include, but is not limited to, a smart device such as a smartphone or a tablet. The wireless device can be configured to run an application (or "app") which, for example, enables the wireless device to communicate with one or more other entities of the network. The application may provide a user of the wireless device (e.g. an ECO) with the ability to manage and/or control an incident as described herein. The wireless device may be configured to enable the user to create, edit and/or view incident information. For example, the wireless device may be configured to enable the user of the wireless device to view one or more BAs of the network (e.g. deployed at an incident). Alternatively, or in addition, the wireless device may be configured to enable the user of the wireless device to (re)configure the one or more BAs and/or the respective one or more wearers of the one or more BAs into groups (e.g. teams). The reconfiguration can comprise, for example, assigning and/or removing a BA, and/or a wearer of the BA, to and/or from a group respectively. As such, an incident can be controlled and managed (e.g. centrally) using the wireless device.

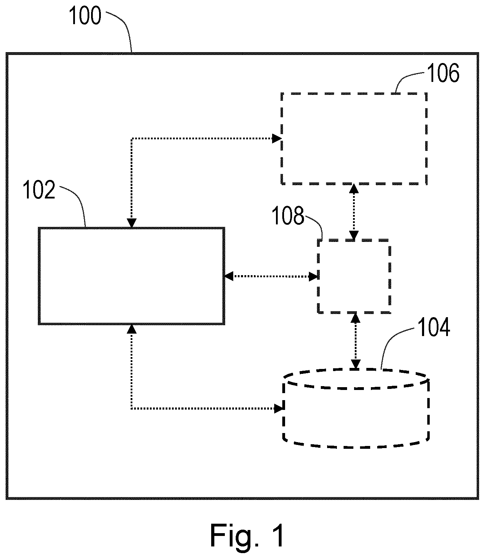

**Fig. 1** illustrates an entity 100 according to an embodiment. In some examples, one or more network nodes of the plurality of network nodes referred to herein may comprise the entity 100. For example, the entity 100 may be comprised in a master node and/or a support node as referred to herein. In some examples, each network node of the plurality of network nodes referred to herein may comprise the entity 100. In some examples, the functionality of the entity 100 may be distributed among two or more of the plurality of network nodes referred to herein.

As illustrated in Fig. 1, the entity 100 comprises processing circuitry (or logic) 102. The processing circuitry 102 controls the operation of the entity 100 and can implement the some or all of the method described herein. The processing circuitry 102 can be configured or programmed to control the entity 100 in the manner described herein.

The processing circuitry 102 can comprise one or more hardware components, such as one or more processors (e.g. one or more microprocessors, one or more multi-core processors, and/or one or more digital signal processors (DSPs)), one or more processing units, one or more processing modules, and/or one or more controllers (e.g. one or more microcontrollers). The one or more hardware components can be arranged on one or more printed circuit board assemblies (PCBAs) contained in one or more housing components. The one or more hardware components may be configured or programmed (e.g. using software or computer program code) to perform the various functions described herein in respect of the entity 100. In particular implementations, each of the one or more hardware components can be configured to perform, or is for performing, individual or multiple steps of the method described herein in respect of the entity 100. The processing circuitry 102 can be configured to run software to perform the method described herein in respect of the entity 100. The processing circuitry 102 can thus be implemented in numerous ways, with software and/or hardware, to perform the various functions described herein in respect of the entity 100.

Briefly, the processing circuitry 102 of the entity 100 can be configured to, if a first master node enters an inactive state, select, based on second information indicative of one or more support nodes, a first support node to be configured as a second master node.

As illustrated in Fig. 1, the entity 100 may optionally comprise a memory 104. Alternatively, the memory 104 may be external to (e.g. separate to or remote from) the entity 100. The memory 104 may comprise any type of non-transitory machine-readable medium, such as at least one cache or system memory. The memory 104 may comprise a volatile or a non-volatile memory. Examples of the memory 104 include, but are not limited to, a random access memory (RAM), a static RAM (SRAM), a dynamic RAM (DRAM), a read-only memory (ROM), a programmable ROM (PROM), an erasable PROM (EPROM), and an electrically erasable PROM (EEPROM), and/or any other memory.

The processing circuitry 102 can be communicatively coupled (e.g. connected) to the memory 104. The processing circuitry 102 may be configured to communicate with and/or connect to the memory 104. The memory 104 may be for storing program code or instructions which, when executed by the processing circuitry 102, cause the entity 100 to operate in the manner described herein. For example, the memory 104 may be configured to store program code or instructions that can be executed by the processing circuitry 102 to cause the entity 100 to operate in accordance with the method described herein in respect of the entity 100. Alternatively or in addition, the memory 104 can be configured to store any information, data, messages, requests, responses, indications, notifications, signals, or similar, that are described herein. The processing circuitry 102 may be configured to control the memory 104 to store information, data, messages, requests, responses, indications, notifications, signals, or similar, that are described herein.

As illustrated in Fig. 1, the entity 100 may optionally comprise a user interface 106. The user interface 106 can be configured to render (or output, display, or provide) information required by or resulting from the method described herein. For example, the user interface 106 may be configured to render (or output, display, or provide) any information, data, messages, requests, responses, indications, notifications, signals, or similar, that are described herein. Alternatively or in addition, the user interface 106 can be configured to receive a user input. For example, the user interface 106 may allow a user to manually enter information or instructions, interact with, and/or control the entity 100. Thus, the user interface 106 may be a user interface that enables the rendering (or outputting, displaying, or providing) of information and/or that enables a user to provide a user input. For example, the user interface 106 may be configured to display incident information indicative of an evacuation order for personnel deployed at the incident.

The user interface 106 may comprise one or more components for rendering information and/or one or more components that enable the user to provide a user input. The one or more components for rendering information can comprise one or more visual components (e.g. a display or display screen, a graphical user interface (GUI) such as a touch screen, one or more lights such one or more light emitting diodes (LEDs), and/or any other visual component), one or more audio components (e.g. one or more speakers, and/or any other audio component), and/or one or more tactile/haptic components (e.g. a vibration function, or any other haptic/tactile feedback component), or any other user interface, or combination of user interfaces. The one or more components that enable the user to provide a user input can comprise one or more visual components (e.g. one or more switches, one or more buttons, a keypad, a keyboard, a mouse, a graphical user interface (GUI) such as a touch screen, and/or any other visual component), and/or one or more audio components (e.g. one or more microphones, and/or any other audio component), and/or one or more tactile/haptic components (e.g. a vibration function, or any other haptic/tactile feedback component), or any other user interface, or combination of user interfaces.

As illustrated in Fig. 1, the entity 100 may optionally comprise a communications interface (or communications circuitry) 108. The communications interface 108 can be communicatively coupled (e.g. connected) to the processing circuitry 102, the memory 104, and/or the user interface 106. Although the communications interface 108 and the user interface 106 are illustrated as separate interfaces, in other embodiments, the communications interface 108 may be part of the user interface 106. The processing circuitry 102 may be configured to communicate with and/or connect to the communications interface 108. In some embodiments, the processing circuitry 102 can be configured to control the communications interface 108 to operate in the manner described herein. The communications interface 108 can be for enabling the entity 100, or components of the entity 100 (e.g. the processing circuitry 102, the memory 104, the user interface 106, and/or any other components of the entity 100), to communicate with and/or connect to each other and/or one or more other components.

For example, the communications interface 108 may be operable to allow the processing circuitry 102 to communicate with and/or connect to the memory 104 and/or vice versa. Similarly, the communications interface 108 may be operable to allow the processing circuitry 102 to communicate with and/or connect to the user interface 106 and/or vice versa. Similarly, the communications interface 108 may be operable to allow the processing circuitry 102 to communicate with and/or connect to any one or more other entities referred to herein. The communications interface 108 can be configured to transmit and/or receive information, data, messages, requests, responses, indications, notifications, signals, or similar, that are described herein. The processing circuitry 102 may be configured to control the communications interface 108 to transmit and/or receive information, data, messages, requests, responses, indications, notifications, signals, or similar, that are described herein.

The communications interface 108 may enable the entity 100, or components of the entity 100, to communicate and/or connect in any suitable way. For example, the communications interface 108 may enable the entity 100, or components of the entity 100, to communicate and/or connect wirelessly, via a wired connection, or via any other communication (or data transfer) mechanism. In some wireless implementations, for example, the communications interface 108 may enable the entity 100, or components of the entity 100, to use radio frequency (RF), Wi-Fi, Bluetooth, or any other wireless communication technology to communicate and/or connect. In some examples, the communications interface 108 may comprise a proprietary radio module.

Although the entity 100 is illustrated in Fig. 1 as comprising a single memory 104, it will be appreciated that the entity 100 may comprise at least one memory (i.e. a single memory or a plurality of memories) 104 that operate in the manner described herein. Similarly, although the entity 100 is illustrated in Fig. 1 as comprising a single user interface 106, it will be appreciated that the entity 100 may comprise at least one user interface (i.e. a single user interface or a plurality of user interfaces) 106 that operate in the manner described herein. Similarly, although the entity 100 is illustrated in Fig. 1 as comprising a single communications interface 108, it will be appreciated that the entity 100 may comprise at least one communications interface (i.e. a single communications interface or a plurality of communications interfaces) 108 that operate in the manner described herein. It will also be appreciated that Fig. 1 only shows the components required to illustrate an embodiment of the entity 100 and, in practical implementations, the entity 100 may comprise additional or alternative components to those shown.

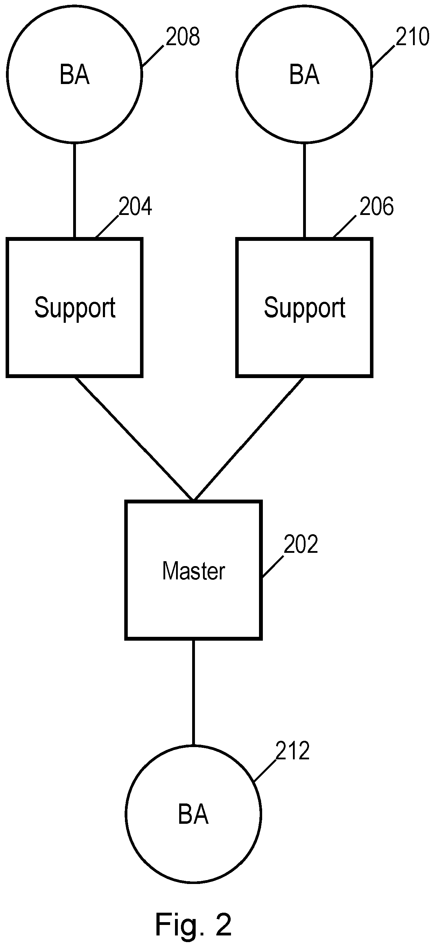

**Fig. 2** illustrates a system according to an embodiment. The system is for handling communications in a network. As illustrated in Fig. 2, the system comprises a plurality of network nodes 202, 204, 206 of the network, and a plurality of BA 208, 210, 212 of the network. As also illustrated in Fig. 2, the plurality of network nodes 202, 204, 206 comprises a master node 202 and one or more support nodes 204, 206. As illustrated in Fig. 2, the plurality of network nodes 202, 204, 206 can connect to each other. The interconnection between the plurality of network node can form a smart network according to some examples. As mentioned herein, the network nodes of the plurality of network nodes 202, 204, 206 can be referred to as hubs. Thus, In some examples, the system can be referred to as a distributed hub network.

As illustrated in Fig. 2, each BA of the plurality of BA 208, 210, 212 is configured to establish a connection to a single corresponding network node of the plurality of network nodes 202, 204, 206. Herein, establish a connection may be understood to mean initiate and/or maintain a connection (e.g. via the network referred to herein). A connection, as mentioned herein, may permit the transmission and/or receipt of (e.g. telemetry) information. For example, the connection that a BA establishes to a corresponding network node may allow the BA to initiate transmission of information towards the corresponding network node and/or receive information from the corresponding network node, and vice versa.

In some examples, each BA may be connected to only one network node of the plurality of network nodes 202, 204, 206. For example, as illustrated in Fig. 2, a second BA 208 may be configured to establish a connection to a second support node 204. As mentioned herein, each network node of the plurality of network nodes 202, 204, 206 is configured as an AP of the network. As such, in some examples, each BA of the plurality of BA 208, 210, 212 may utilise a single network node AP to access the network. It will be understood that, although each BA may establish a connection with only a single network node, each BA may establish a plurality of (e.g. simultaneous) connections with other entities of the network.

In some examples, each BA of the plurality of BA 208, 210, 212 may (e.g. initially) access the network via a particular network node of the plurality of network nodes 202, 204, 206. For example, each BA may log onto the system and/or network via an initial network node. The initial network node can be said to be the network node that the BA is logged on to. In some examples, the system may be configured to forward information associated with a BA to the network node that the BA is logged on to. In some examples, each network node of the plurality of network nodes 202, 204, 206 may be configured to obtain and/or store information associated with the BA that are logged onto the network node. In this way, a single network node can monitor a BA throughout the entire active duration of the BA in the network (e.g. from logging on to logging ff), thus increasing reliability. Moreover, a BA may be able to maintain network communication with the network node that the BA is logged onto via the plurality of network nodes 202, 204, 206 as described herein. This functionality is useful in scenarios in which the system is spread over a large area (e.g. involving a large incident), as the system allows each BA to connect to a (e.g. closest) network node and relay information to and/from the network node that they are logged on to. As such, each BA can be provided with an operational range that is greater than that of the network node that the BA is (e.g. initially) logged on to.

Although not illustrated in Fig. 2, in some examples, the system may comprise a cloud entity (e.g. a cloud server) of the network. In some examples, the plurality of network nodes 202, 204, 206 may initiate transmission of first information, as defined herein, towards the cloud entity. In some examples, each network node may only initiate transmission, towards the cloud entity, of first information associated with one or more BA that are logged on to the network node. As such, each network node may be responsible for storing and/or initiating transmission of information associated with BA which are logged on to the network node.

As illustrated in Fig. 2, the master node 202 is configured to establish a connection to each support node of the one or more support nodes 204, 206. Thus, in some examples, the master node 202 may have a connection with each and every one of the one or more support nodes 204, 206. In some examples, the one or more support nodes 204, 206 may be configured to communicate with each other via the master node 202. In some examples, the master node 202 may be the node through which any entity in the network can communicate with any other entity in the network. In some examples, the connection that the master node 202 establishes with each support node can be a direct connection, as defined herein.

In some examples, a support node may be configured to establish a connection to the master node 302 in response to being activated. For example, if the support node is within range of the master node 302, the support node may automatically (e.g. attempt to) establish a connection with the master node 302 upon activation of the support node. In some examples, if a network node travels out of range of the network, then the network node may (e.g. automatically) leave the network.

Although not illustrated in Fig. 2, each support node of the one or more support nodes 204, 206 is configured to initiate transmission of first information towards the master node 202. The first information is indicative of one or more BA corresponding to each support node. For example, the second support node 204 can be configured to initiate transmission of first information indicative of the one or more BA corresponding to the second support node 204 (i.e. the second BA 208 in the example illustrated in Fig. 2). A BA may correspond to a support node if a (e.g. direct) connection is established between the BA and the support node. For example, a BA may correspond to a support node if the support node operates as an AP (e.g. to the network) for the BA.

In some examples, the master node 202 can be configured to initiate transmission of a first request towards the one or more support nodes 204, 206. The first request can be a request for the first information, as defined herein. In some examples, one or more network nodes of the plurality of network nodes 202, 204, 206 may be configured to request information from other network nodes of the network. For example, if a network node is missing information (e.g. data) associated with an entity of the network (e.g. a BA and/or a wearer of a BA), the network node may initiate transmission of a request to one or more other network nodes for the missing information. As such, each network node in the system can be provided with information of all entities of the network, even if said entities are out of (e.g. immediate) network range of the network node. As such, the effective range of the network nodes is increased. This can be especially useful in an emergency response incident scenario. For example, in an emergency response incident, each network node can be provided with information of every BA wearer (e.g. firefighter) deployed at the incident. As such, the system is more robust as relevant data about BA and/or BA wearers can be provided (e.g. and backed up) to every network node of the plurality of network nodes 202, 204, 206.

The first information referred to herein may comprise information obtained and/or generated by the one or more corresponding BA. In some examples, the first information may be indicative of a status of the one or more corresponding BA. In some examples, the first information can comprise location information of the one or more corresponding BA, information indicative of a volume of breathable gas stored by the one or more corresponding BA, and/or alarm information associated with the one or more corresponding BA. In some examples, the location information can comprise global positioning system, GPS, data. For example, the location information can be indicative of a live position of each (e.g. wearer) of the one or more corresponding BA. The alarm information referred to herein may comprise information indicative of a thermal alarm, a hardware alarm, and/or a user generated alarm. The information indicative of a volume of breathable gas stored by the one or more corresponding BA may be indicative of a remaining capacity at each BA of the one or more corresponding BA. In some examples, the breathable gas may be stored in one or more storage tanks of the one or more BA.

In some examples, the master node 202 may be configured to determine a time slot for each support node of the one or more support nodes 204, 206, and/or each BA of the plurality of BA 208, 210, 212. A time slot, as referred to herein, can correspond to one or more periods of time in which a support node can communicate with a BA (e.g. and vice-versa). For example, a time slot may define at what time a BA should transmit (e.g. telemetry) information towards its corresponding support node (e.g. that the BA is logged on to). In some examples, the master node 202 may be configured to allocate one or more time slots to each support node of the one or more support nodes 204, 206. The allocation can be based on the number of BA corresponding to each support node (e.g. the number of BA that are logged on to the support node). In some examples, the master node 202 may be configured to initiate transmission of a first message towards each support node of the one or more support nodes 204, 206. As such, each support node of the one or more support nodes 204, 206 may be configured to receive the first message from the master node 202. The first message can comprise information indicative of the one or more time slots.

In some examples, each support node of the one or more support nodes 204, 206 may be configured to assign at least one time slot of the one or more time slots to one or more corresponding BA. Therefore, in some examples, each support node can determine how to assign time slots for communications to and/or from one or more BA corresponding to the support node. In some examples, each support node of the one or more support nodes 204, 206 may initiate transmission of the second message towards the one or more corresponding BA. Thus, in some examples, each BA corresponding to the support node can receive the second message from the support node. The second message can comprise information indicative of the at least one time slot. The at least one time slot can be, for example, unique to each receiving BA of the one or more corresponding BA.

As described above, in some examples, the master node 202 can allocate time slots to each support node of the one or more support nodes 204, 206, and then each support node can allocate a slot to one or more BA corresponding to the support node. In this way, the master node 202 can be configured as the master of all time slots in the network (e.g. at a top level), and each support node can be in control of the time slots for each BA corresponding to (e.g. logged on to) the support node. Thus, in some examples, the master node 202 may be responsible for (e.g. centrally) handling communication timing in the network.

Although not illustrated in Fig. 2, if a first master node enters an inactive state, the system described herein is configured to select, based on second information indicative of the one or more support nodes 204, 206, a first support node to be configured as a second master node. As such, if an original master node enters the inactive state a new master node can be selected to be configured as the master node of the system. In some examples, the plurality of network nodes referred to herein may comprise only a single active master node at any one time. For example, only one of the first master node referred to herein, and the second master node referred to herein, may be in an active state in the network (e.g. at any point in time).

In some examples, the first master node entering the inactive state may comprise one or more of a loss of network connection at the first master node, a network failure occurring at the first master node, and the first master node powering off. The first master node may be powered off if, for example, the first master node runs out of battery. In some examples, the first master node may enter the inactive state if the first master node is removed from the network. In some examples, in the inactive state, the first master node may be unable to act as an AP for any other entity (e.g. a BA as referred to herein) of the network.

As mentioned herein, the selection of the first support node to be configured as the second master node is based on second information indicative of the one or more support nodes 204, 206. In some examples, the second information can comprise information indicative of an active duration of each support node of the one or more support nodes 204, 206. As such, in some examples, the first support node may be selected by selecting the support node that has been active in the network for the longest (e.g. time) duration (e.g. relative to all of the other one or more support nodes 204, 206). Active duration of a support node may correspond to the amount of time that the support node has been part of the network.

Alternatively, or in addition, in some examples, the second information may comprise information indicative of a number of network connections associated with each support node of the one or more support nodes. The number of network connections associated with each support node may correspond to the number of network entities that the support node has established a (e.g. direct) connection with (e.g. in the network). As such, in some examples, the most connected support node may be selected as the first support node.

Alternatively, or in addition, in some examples, the second information may comprise information indicative of a number of corresponding BA associated with each support node of the one or more support nodes. As such, in some examples, the support node that is associated with the most corresponding BA may be selected as the first support node.

Alternatively, or in addition, in some examples, the second information may comprise information indicative of a stored energy value of each support node of the one or more support nodes. In some examples, selecting the first support node based on the second information may comprise selecting the support node associate with the largest stored energy value. For example, the stored energy value of each support node may correspond to a remaining battery level of the support node. As such, in some examples, the support node which has the most remaining battery capacity can be selected as the first support node.

It will be understood that some or all of the elements of the first information can be used to select the first support node. For example, in some scenarios the selection of the first support node can be based on both information indicative of a stored energy value of each support node and a number of network connections associated with each support node. In such scenarios, if two or more support nodes have the same number of associated network connections, the first support node can be selected from said two or more support nodes based on which of the two or more support nodes has the highest stored energy value. It will be understood that this is merely an example, and that any of the information comprised in the first information as described herein can be used to make the selection of the first support node. Therefore, there are several possible selection criteria for selection (e.g. assignment) of the first support node as the second master node.

In some examples, selecting the first support node based on the second information may comprise selecting the support node associated with one or more of: the longest active duration, the highest number of network connections, the highest number of corresponding breathing apparatus, and the largest stored energy value.

Although not illustrated in Fig. 2, in some examples, the system referred to herein may be configured to configure the first support node as the second master node. In some examples, the selection and/or configuration of the first support node, as described herein, may be performed by the one or more support nodes. For example, the distributed computing resources corresponding to the one or more support nodes may perform the selection and/or configuration. In some examples, the selection and/or configuration of the first support node, as described herein, may be performed by the entity 100 (e.g. the processing circuitry 102 of the entity 100) described herein. Configuring the first support node as the second master node may comprise the first support node receiving a request (e.g. from one or more other support nodes) to (re)configure itself as the second master node.

Although not illustrated in Fig. 2, in some examples, the system may comprise a wireless device (e.g. a tablet), as defined herein. In some examples, the master node 202 (e.g. the first master node and/or the second master node) may be configured to initiate transmission of the first information, as defined herein, towards the wireless device. Therefore, in some examples, the wireless device can monitor the status of the plurality of BA 208, 210, 212 via the master node 202. In some examples, the wireless device may be associated with a user (e.g. an ECO). As such, the wireless device can provide the user (E.g. via a display of the wireless device) with the first information, as defined herein. For example, in scenarios in which the first information comprises location information, the user may use the wireless device to monitor the live position of each BA (e.g. wearer) of the plurality of BA 208, 210 of the network.

In some examples, the wireless device may be associated with a particular network node of the plurality of network nodes 202, 204, 206. The wireless device may be associated with the particular network node if, for example, the particular network node has established a direct connection with the wireless device, as defined herein. In such an example, although the wireless device may be able to receive information associated with each BA of the plurality of BA 208, 210, 212, the wireless device may only be able to control the BA which are logged onto the particular network node associated with the wireless device. Controlling a BA, as mentioned herein, may comprise initiating transmission of commands and/or instructions towards the BA.

In some examples, the plurality of network nodes 202, 204, 206 and the plurality of BA 208, 210, 212 may be deployed at an emergency response incident, as defined herein. In some examples, each BA of the plurality of BA 208, 210, 212 may be associated with an emergency responder. For example, each BA of the plurality of BA 208, 210, 212 may be associated with a corresponding firefighter wearer of the BA.

In some examples, each network node of the plurality of network nodes 202, 204, 206 may have a network connectivity range of up to 1.5 km. For example, each network node of the plurality of network nodes 202, 204, 206 may be able to serve as an AP for any entities (e.g. a BA) within a 1.5km range of the network node.

As mentioned herein, each BA of the plurality of BA 208, 210, 212 is configured to establish a connection to a single corresponding network node of the plurality of network nodes 202, 204, 206. The term "corresponding" network node, when used in relation to a BA, can be understood to mean the network node which serves as the (e.g. main) AP for the BA. As such, a reference to one or more corresponding BA of a network node can correspond to the one or more BA that utilise the network node as an AP. In some examples, the one or more BA corresponding to each support node of the one or more support nodes 204, 206 may be out of range of the master node 202. As such, in some examples, the one or more BA utilising a support node as an AP may be out of range of the master node 202 of the network. Therefore, in some examples, the one or more support nodes 204, 206 can greatly increase the effective range of the network. This can be especially useful when the plurality of network nodes 202, 204, 206 is deployed at a large incident (e.g. large area and/or volume) as each network entity (e.g. a BA) need only be in range of a single network node (e.g. support node) in order to access every other entity of the network. This can be useful if a BA has originally accessed the network through a first network node. In such a case, the first network node may be primarily responsible for the BA, however, can still monitor the (e.g. activity of) the BA even if the BA wanders out of range of the first network node.

Although not illustrated in Fig. 2, in some examples, the system may comprise one or more relay nodes configured to operate as a relay between two or more entities of the network. The one or more relay nodes can act as a repeater that is configured to relay communications (e.g. and thus extend the range of the network).

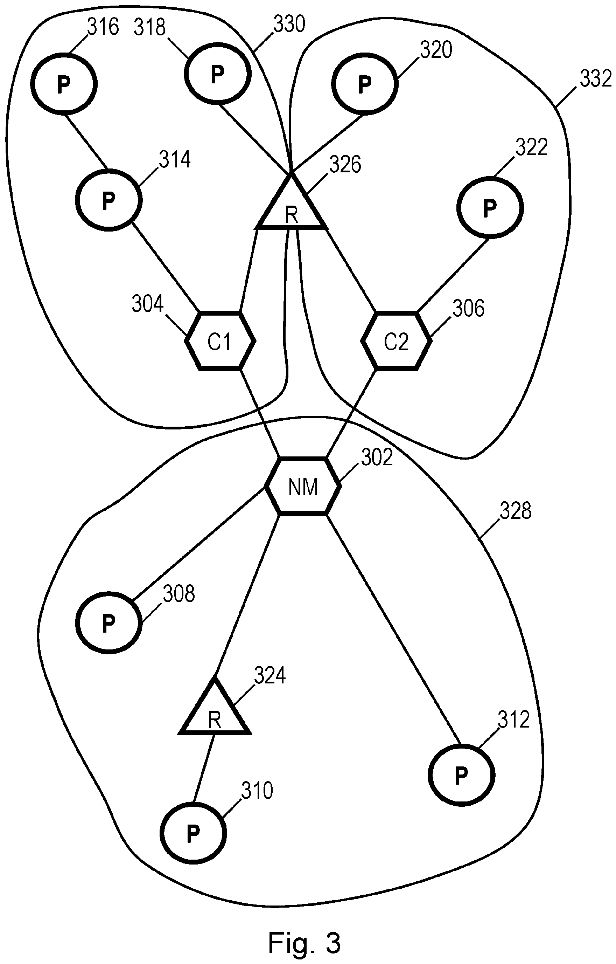

**Fig. 3** illustrates a system according to an embodiment. The system is for handling communications in a network. The system illustrated in Fig. 3 can operate in accordance with the functionality of the system as described with reference to Fig. 2 above. As illustrated in Fig. 3, the system comprises a plurality of network nodes 302, 304, 306 of the network, and a plurality of BA 308, 310, 312, 314, 316, 318, 320, 322 ("P"s) of the network. As also illustrated in Fig. 3, in some examples, the system can comprise one or more relay nodes 324, 326 ("R"). As illustrated in Fig. 3, the plurality of network nodes 302, 304, 306 comprises a master node 302 ("NM") and one or more support nodes 304, 306 ("C1" and "C2"). In the example illustrated in Fig. 3, the one or more support nodes comprise a primary support node 304 and a secondary support node 306. However, it will be understood that the system illustrated in Fig. 3 is merely an example and that the one or more support nodes 304, 306 may comprise any number of support nodes. The plurality of network nodes 302, 304, 306 can be referred to herein as a plurality of controllers. The master node 302 can be referred to herein as a network master (NM).

The plurality of breathing apparatus can be referred to herein as a plurality of portables (P).

As illustrated in Fig. 3, the connection established between each support node of the plurality of support nodes 304, 306 and the master node 302 can allow for a scenario which provides for multiple smaller networks (e.g. operating in the same frequency band) to become one larger network that can communicate with every entity (e.g. device) that is in range of a network node.

Fig. 3 illustrates a scenario in which the system provides for an increased effective range of the network. Within large (e.g. emergency response) incidents, there can be multiple entry points. As illustrated in Fig. 3, this system can allow every entity (e.g. BA) to connect to every other entity of the network.

In the example illustrated in Fig. 3, the master node 302 can be considered to be a first master node, as defined herein. As illustrated in Fig. 3, in some examples, each network node of the plurality of network nodes 302, 304, 306 can be associated with a corresponding cluster 328, 330, 332. The corresponding cluster to a network node can comprise the network entities (e.g. BA) for which the network node serves as AP. In the example illustrated in Fig. 3, the system comprises a first cluster 328, a second cluster 330, and a third cluster 332. In the example illustrated in Fig. 3, the master node 302 is associated with a first cluster 328. The first cluster 328 comprises the master node 302, three BA of the plurality of BA 308, 310, 312, 314, 316, 318, 320, 322, and a first relay node 324. In this scenario, the first relay node 324 can be configured to operate as a relay between the master node 302 and at least one of the BA 310 of the first cluster 328. Thus, the first relay node 324 can act as a signal extender for the master node 302 and/or the at least one BA 310.

As illustrated in Fig. 3, in some examples, each of the one or more support nodes 304, 306 may establish a direct connection to the master node 302. A direct connection between two entities can be understood to mean a connection between the two entities which does not involve an intermediary entity (e.g. in the connection path). For example, the connection between the master node 302 and the first relay node 324 in the example system illustrated in Fig. 3 can be said to be a direct connection. In some examples, configuring a first support node as a second master node as described herein, may comprise the first support node establishing a direct connection to the remaining support nodes of the network.

As illustrated in Fig. 3, in some examples, a BA may operate as a relay between a network node and another BA. For example, in the scenario illustrated in Fig. 3, a first BA 316 of the second cluster 330 is connected to the primary support node 304 via a second BA 314 of the second cluster 330. The second BA 314 can therefore act as a relay of information between the first BA 316 and the primary support node 304 according to some examples. The connection between the first BA 316 and the primary support node 304 can be said to be an indirect connection.

In some examples, each network node of the plurality of network nodes may correspond to the same type of device (e.g. comprise the same hardware components). In some examples, a network node, as referred to herein, may be a portable device. For example, a network node may comprise a device that can be carried (e.g. by a firefighter), placed on the ground (e.g. at an entry point to an incident), and/or installed inside a vehicle (e.g. a fire truck).

There is also provided a computer program embodied on a non-transitory machine-readable medium. The non-transitory machine-readable medium comprises instructions. The instructions are executable such that, on execution by a suitable computer or processor, the computer or processor is caused to perform the method described herein. The non-transitory machine-readable medium may be, for example, any entity or device capable of carrying the computer program product. For example, the non-transitory machine-readable medium may include a data storage, such as a ROM (such as a CD-ROM or a semiconductor ROM) or a magnetic recording medium (such as a hard disk). Furthermore, the non-transitory machine-readable medium may be a transmissible carrier, such as an electric or optical signal, which may be conveyed via electric or optical cable or by radio or other means. When the computer program product is embodied in such a signal, the non-transitory machine-readable medium may be constituted by such a cable or other device or means. Alternatively, the non-transitory machine-readable medium may be an integrated circuit in which the computer program product is embedded, the integrated circuit being adapted to perform, or used in the performance of, the method described herein.

The techniques described herein facilitate for the interconnection of a plurality of network nodes and a plurality of BA of a network. Each network node of the plurality of network nodes can act as an AP for the network, and thus the effective connection range of the network is advantageously increased. For example, a network node of the plurality of network nodes can be placed (e.g. deployed) at a certain location in order to maximise the range of the network and the usefulness of said network to the BA utilising the network node as an AP to the network. Moreover, the techniques described herein allow for a more robust communications system by providing for automatic reconfiguration of the system in the event that a maser node of the plurality of master node enters an inactive state. By minimising and/or avoiding time in which the system is without an active master node, the system ensures that communication between network entities is maintained. Such robustness is especially advantageous in emergency response incident scenarios, in which constant and reliable communication between equipment and personnel can mean the difference between success and failure.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A system for handling communications in a network, the system comprising:
a plurality of network nodes (202, 204, 206, 302, 304, 306), wherein each network node of the plurality of network nodes (202, 204, 206, 302, 304, 306) is configured as an access point for the network; and
a plurality of breathing apparatus (208, 210, 212, 308, 310, 312, 314, 316, 318, 320, 322) of the network, wherein each breathing apparatus of the plurality of breathing apparatus (208, 210, 212, 308, 310, 312, 314, 316, 318, 320, 322) is configured to establish a connection to a single corresponding network node of the plurality of network nodes (202, 204, 206, 302, 304, 306);
wherein the plurality of network nodes (202, 204, 206, 302, 304, 306) comprises a master node (202, 302) and one or more support nodes (204, 206, 304, 306), and wherein the master node (202, 302) is configured to establish a connection to each support node of the one or more support nodes (204, 206, 304, 306);
wherein each support node of the one or more support nodes (204, 206, 304, 306) is configured to initiate transmission of first information indicative of one or more corresponding breathing apparatus towards the master node (202, 302); and
wherein the system is configured to:
if a first master node enters an inactive state, select, based on second information indicative of the one or more support nodes (204, 206, 304, 306), a first support node to be configured as a second master node.

2. The system as claimed in claim 1, wherein the system is configured to:
configure the first support node as the second master node.

3. The system as claimed in any of the preceding claims, wherein the second information comprises information indicative of:
an active duration of each support node of the one or more support nodes (204, 206, 304, 306);
a number of network connections associated with each support node of the one or more support nodes (204, 206, 304, 306);
a number of corresponding breathing apparatus associated with each support node of the one or more support nodes (204, 206, 304, 306); and/or
a stored energy value of each support node of the one or more support nodes (204, 206, 304, 306).

4. The system as claimed in claim 3, wherein selecting the first support node based on the second information comprises selecting the support node associated with:
the longest active duration;
the highest number of network connections;
the highest number of corresponding breathing apparatus; and/or
the largest stored energy value.

5. The system as claimed in claims 3 or 4, wherein:
the stored energy value corresponds to a remaining battery capacity.

6. The system as claimed in any of the preceding claims, wherein:
the system comprises a wireless device; and
the master node (202, 302) is configured to initiate transmission of the first information towards the wireless device.

7. The system as claimed in any of the preceding claims, wherein the first information comprises:
location information of the one or more corresponding breathing apparatus;
information indicative of a volume of breathable gas stored by the one or more corresponding breathing apparatus; and/or
alarm information associated with the one or more corresponding breathing apparatus.

8. The system as claimed in claim 7, wherein:
the location information comprises global positioning system data.

9. The system as claimed in any of the preceding claims, wherein:
the plurality of network nodes (202, 204, 206, 302, 304, 306) and the plurality of breathing apparatus (208, 210, 212, 308, 310, 312, 314, 316, 318, 320, 322) are deployed at an emergency response incident; and
each breathing apparatus of the plurality of breathing apparatus (208, 210, 212, 308, 310, 312, 314, 316, 318, 320, 322) is associated with an emergency responder.

10. The system as claimed in any of the preceding claims, wherein:
each network node of the plurality of network nodes (202, 204, 206, 302, 304, 306) has a network connectivity range of up to 1.5 km.

11. The system as claimed in any of the preceding claims, wherein:
the master node (202, 302) is configured to initiate transmission of a first request towards the one or more support nodes (204, 206, 304, 306), wherein the first request is a request for the first information.

12. The system as claimed in any of the preceding claims, wherein:
the one or more breathing apparatus corresponding to each support node of the one or more support nodes (204, 206, 304, 306) are out of range of the master node (202, 302).

13. The system as claimed in any of the preceding claims, wherein the first master node entering the inactive state comprises one or more of:
a loss of network connection at the first master node;
a network failure occurring at the first master node;
the first master node powering off.

14. The system as claimed in any of the preceding claims, the system comprising:
one or more relay nodes (324, 326) configured to operate as a relay between two or more entities of the network.

15. The system as claimed in any of the preceding claims, wherein:
the network is a radio network.
